# EUROPEAN PATENT APPLICATION

(11) **EP 4 834 647 A1**
(43) Date of publication of application: **04.11.2026**
(21) Application number: 25905656.2
(22) Date of filing: 26.12.2025
(51) Int. Cl.: B60L 53/302, B60L 53/16, B60L 53/18, H01B 7/42, F25B 30/02, B60L 53/30, H01B 7/02

(54) **HIGH-OUTPUT CHARGING SYSTEM**

(30) Priority: 27.12.2024 KR 20240198735; 02.10.2025 KR 20250145353
(71) Applicant: TMEVnet Co., Ltd., Cheonan-si, Chungcheongnam-do 31156 (KR)
(72) Inventor: CHO, Hyoung Nam, Seoul 08637 (KR); YU, Jin, Seo-gu, Incheon 22879 (KR); CHOI, Hyung Jin, Gimpo-si, Gyeongggi-do 10013 (KR); KIM, Chi Ho, Seoul 08358 (KR)
(74) Representative: Urizar Anasagasti, Jesus Maria
(86) International application number: PCT/KR2025/022848
(87) International publication number: WO 2026/142361

(57) **Abstract**

Proposed is a high-power charging system including a cooling system for cooling a high-power power line for fast charging of an electric vehicle, the high-power charging system being configured such that a power line in the form of a bare wire is inserted into a cooling unit and the power line is exposed to a low-temperature refrigerant environment so as to perform heat exchange.

## Description

### Technical Field

The present disclosure relates to a system for effectively cooling heat generated during high-power charging of an electric vehicle. More particularly, the present disclosure relates to a power-refrigerant integrated high-power charging system in which a cooling system and a power system are integrated into a single structure such that a power line is inserted in the form of a bare wire into a refrigerant pipe and directly contacts a refrigerant to perform heat exchange and which simultaneously secures cooling efficiency and stability by including an expansion means and a vortex-prevention flow path.

### Background Art

As high-current charging for increasing a charging speed of an electric vehicle becomes widespread, a heat generation problem in a charging cable and a connector becomes severe. To address this problem, various means for cooling a power line have been proposed. However, since a refrigerant pipe and a wire are separately disposed, there are limitations in that a structure is complicated, a volume is large, and cooling efficiency is low.

### Disclosure

### Technical Problem

An objective of the present disclosure is to provide a high-power charging system maximizing cooling efficiency through a structure in which a power line and a refrigerant pipe are integrated, the high-power charging system being configured such that a mounting position of an expansion means is adjusted so that cooling efficiency of a wire that generates heat during a charging process is increased, and the high-power charging system providing stable and reliable operation by integrating expansion and flow rate control functions at a connector end and a vortex prevention structure.

### Technical Solution

According to the present disclosure there is provided a high-power charging system including: a connector for charging an electric vehicle; a power supply unit including a power line for supplying electricity to the connector; and a cooling system including a cooling unit in which a refrigerant for cooling the power line flows, wherein the power line is configured in the form of a bare wire, wherein the cooling unit is formed in a structure in which the bare wire is directly inserted into a refrigerant pipe through which the refrigerant flows, and wherein the cooling system forms a vapor compression refrigeration cycle including a compressor and a condenser.

Here, the cooling system may form a closed-loop structure connecting the compressor, the condenser, an expansion valve, and the cooling unit in which the refrigerant for cooling the power line flows, wherein the refrigerant in the refrigerant pipe may be supplied in a low-temperature and low-pressure liquid state after passing through the expansion valve and directly contacts the bare wire, and at least a portion of the refrigerant may undergo a phase change from the liquid state to a gaseous state through heat exchange during charging, thereby absorbing latent heat and directly cooling the bare wire. Furthermore, the refrigerant pipe may extend to the connector.

In addition, the cooling system may include an insulation portion at at least one of before and after the refrigerant flows into the cooling unit.

In addition, the power line may include a positive electrode line and a negative electrode line, wherein the cooling unit may include a positive electrode line refrigerant pipe for cooling the positive electrode line, a negative electrode line refrigerant pipe for cooling the negative electrode line, and a connection pipe connecting the positive electrode line refrigerant pipe and the negative electrode line refrigerant pipe to each other, and wherein the positive electrode line refrigerant pipe and the negative electrode line refrigerant pipe may be formed of a thermal insulation and electrical insulation material having a lower thermal conductivity than that of the refrigerant pipe through which the refrigerant flows in the cooling system.

In addition, the connection pipe may include an insulation portion.

In addition, the power line may include a positive electrode line and a negative electrode line, and the cooling system may be provided as a plurality of cooling systems, thereby separately cooling the positive electrode line or the negative electrode line.

Meanwhile, the connector may include a power supply terminal for connection with a charging terminal of the electric vehicle, and
the cooling unit may include a sub-refrigerant pipe for cooling the power supply terminal by bypassing a flow of a portion of the refrigerant.

Here, the refrigerant may be selected from one of R134a, R404A, R507, 1234yf, and 1234ze as a refrigerant for ultra-low temperature cooling, and at least a portion of the refrigerant may undergo a liquid-to-vapor phase change through heat exchange in the cooling unit.

Meanwhile, the vapor compression refrigeration cycle may further include an expansion means for reducing pressure of the refrigerant, and the expansion means may be an orifice or a nozzle instead of an expansion valve.

Here, the orifice or the nozzle may replace the expansion valve, or may be mounted at at least one position selected from an inner portion of the connector and an insulation portion provided before the power line is inserted into the cooling unit.

In addition, the cooling unit may include a positive electrode line refrigerant pipe for cooling a positive electrode line, a negative electrode line refrigerant pipe for cooling a negative electrode line, and a third refrigerant pipe through which the refrigerant flows.

Here, a ground line may be inserted into the third refrigerant pipe.

In addition, the refrigerant cooled by an expansion means after the refrigerant flows into the connector through the third refrigerant pipe may be branched and discharged into the positive electrode refrigerant pipe and the negative electrode refrigerant pipe.

Meanwhile, the connector may further include a cover for preventing a vortex that may occur due to a momentary increase in a flow rate in a section where the refrigerant is introduced into the connector and for uniformly controlling a flow of the refrigerant.

### Advantageous Effects

According to the present disclosure, by configuring the power line and the refrigerant pipe as a single integrated structure to serve as the cooling unit, heat generated during charging may be more effectively controlled. Due to the structure in which the bare wire directly contacts the refrigerant inside the refrigerant pipe, a heat transfer path is shortened and heat exchange efficiency is increased, so that a temperature of a wire may be stably maintained even in a high-power charging environment.

In addition, the orifice or the nozzle applied instead of the expansion valve simplifies the structure and reduces a possibility of failure, and is disposed at a connector end or within the insulation portion on an inlet side, thereby guiding the refrigerant after expansion to rapidly reach the cooling unit.

In order to prevent a vortex or non-uniform cooling that may occur due to a momentary increase in a flow rate when the refrigerant flows into the connector, a circulation port cover is formed inside the connector, so that an overall refrigerant flow may be stabilized and consistency of cooling may be secured.

By including the ground line in the cooling loop, a heat generation problem of the ground line as well as the power line may be alleviated, and electrical safety and thermal stability may be simultaneously secured. Particularly, a flow-path design in which the refrigerant is introduced through the third refrigerant pipe and is branched into the positive electrode line refrigerant pipe and the negative electrode line refrigerant pipe after passing through the expansion means secures a balance of heat distribution, thereby reducing a cooling deviation of each power line and contributing to increasing reliability during high-speed charging.

As described above, the present disclosure provides the charging and cooling system capable of realizing stable and efficient cooling even in a high-power environment, so that performance and reliability of electric vehicle charging infrastructure may be significantly increased.

### Description of Drawings

FIG. 1 is a view illustrating a basic concept of the present disclosure.
FIG. 2 is a detailed view illustrating a cooling unit of another embodiment having a sub-cooling unit according to the present disclosure.
FIG. 3 is an enlarged view illustrating part A of FIG. 1 according to the present disclosure.
FIG. 4 is a view illustrating a conceptual diagram of still another embodiment having a plurality of cooling systems according to the present disclosure.
FIG. 5 is a view illustrating a conceptual diagram of yet another embodiment of an expansion means according to the present disclosure.
FIG. 6a is an enlarged view illustrating part Z of FIG. 5 according to the present disclosure.
FIG. 6b is an exploded perspective view illustrating an insulation portion and a refrigerant pipe applied to the present disclosure.
FIG. 6c is an exploded perspective view illustrating a valve and the refrigerant pipe of the cooling system applied to the present disclosure.
FIG. 7 is a conceptual diagram illustrating yet another embodiment having a third refrigerant pipe according to the present disclosure.
FIG. 8a and FIG. 8b are conceptual diagrams illustrating a connector side of yet another embodiment having the third refrigerant pipe according to the present disclosure.
FIG. 9 is a conceptual diagram illustrating yet another embodiment illustrating the connector side of yet another embodiment having the third refrigerant pipe according to the present disclosure.
FIG. 10 is a cross-sectional conceptual diagram illustrating an embodiment illustrating the connector side of yet another embodiment having the third refrigerant pipe according to the present disclosure.

### Mode for Invention

Hereinafter, an embodiment of the present disclosure will be described in detail with reference to the accompanying drawings.

Since the present disclosure may be variously changed and have various embodiments, particular embodiments will be exemplified in the drawings and will be described in detail in the detailed description. However, this is not intended to limit the present disclosure to a particular disclosed form. On the contrary, the present disclosure is to be understood to include all various alternatives, equivalents, and substitutes that may be included within the idea and technical scope of the present disclosure. In addition, it should be noted that the drawings disclosed herein are not limited and may be embodied in other forms. Furthermore, throughout the specification, the same reference numerals refer to the same components, and it should be noted that like components are indicated by like reference numerals throughout the drawings wherever possible.

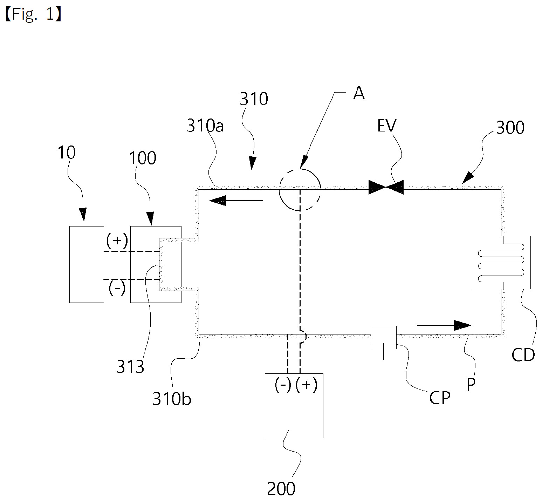

Referring to FIG. 1, a high-power charging system of the present disclosure includes a connector 100, a power supply unit 200, and a cooling system 300.

The power supply unit 200 is configured to supply direct current for fast charging of an electric vehicle 10, and is provided with a power line including a positive electrode line 210a and a negative electrode line 210b. In the present disclosure, the power line may be provided in the form of a bare wire, and a metal wire such as a copper wire, an aluminum wire, an alloy wire, and so on in a state without a separate coating or other insulation may be provided. The bare wire may be provided as a single wire or a stranded wire. Since the bare wire does not have a coating, the bare wire is directly exposed to an environment, and an overall volume of the bare wire is reduced, so that a relatively lightweight charging system may be provided.

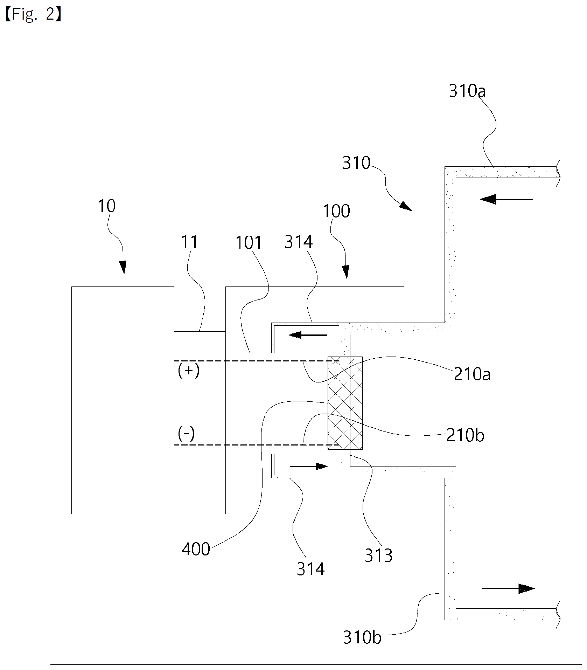

Referring to FIG. 1 and FIG. 2, the connector 100 is configured to connect the electric vehicle 10 and the charging system to each other. Furthermore, by connecting a power supply terminal 101 provided in the connector 100 to a charging terminal 11 of the electric vehicle 10, electric power supplied by the power line of the power supply unit 200 is supplied to the electric vehicle 10 to perform charging.

The cooling system 300 is provided so as to manage heat of the charging system by removing Joule heat generated during transmission of electricity, such as in the power line 210a and 210b and the power supply terminal 101, thereby reducing electrical resistance. The cooling system 300 is provided as a closed loop forming a cooling cycle including a compressor CP, a condenser CD, an expansion valve EV, and a cooling unit 310, and an insulating refrigerant flows within the closed loop and circulates through the entire cooling cycle.

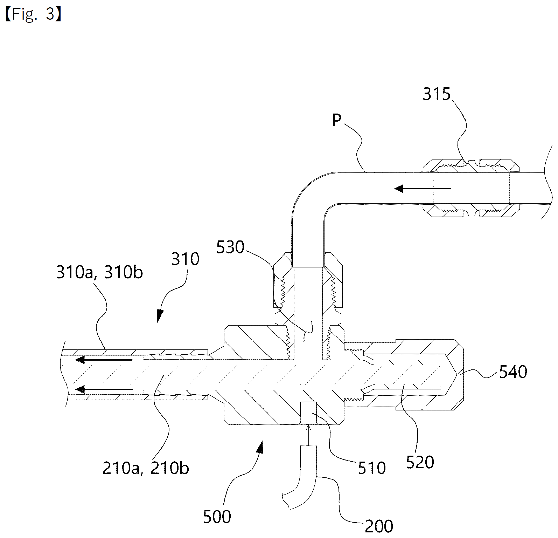

Referring to FIG. 3 which is an enlarged view of part "A" of FIG. 1, the cooling unit 310 may be provided in the form of a refrigerant pipe in which the insulating refrigerant flows and the insulating refrigerant directly cools the positive electrode line 210a or the negative electrode line 210b. The positive electrode line 210a and the negative electrode line 210b in the form of bare wires are inserted into the cooling unit 310 and are directly exposed to a low-temperature insulating refrigerant environment. The bare metal wires without coating directly contact the refrigerant flowing in a direction of an arrow inside the refrigerant pipe in the drawing, and heat exchange is rapidly and efficiently performed.

As illustrated in FIG. 1 and FIG. 2, the cooling unit 310 may include a positive electrode line refrigerant pipe 310a for cooling the positive electrode line 210a, a negative electrode line refrigerant pipe 310b for cooling the negative electrode line 210b, and a connection pipe 313 connecting the positive electrode line refrigerant pipe 310a and the negative electrode line refrigerant pipe 310b to each other. The refrigerant flows in the cooling unit 310 along the positive electrode line refrigerant pipe 310a → the connection pipe 313 → and the negative electrode line refrigerant pipe 310b, or in a reverse direction.

The positive electrode line refrigerant pipe 310a, the connection pipe 313, and the negative electrode line refrigerant pipe 310b may be provided as a portion of a refrigerant pipe P formed of a material such as copper provided for allowing the refrigerant to flow throughout the cooling system 300 including the compressor CP, the condenser CD, and the expansion valve EV, and may be formed of a heat exchange material such as a material identical to that of the refrigerant pipe P. That is, the refrigerant pipe in which the positive electrode line 210a and the negative electrode line 210b are embedded in a form in which the positive electrode line 210a and the negative electrode line 210b are directly inserted in a portion of the refrigerant pipe is provided up to the connector 100, thereby performing thermal management. By using the connected refrigerant pipe as the cooling unit 310, provision of the cooling system 300 is facilitated, and a risk of refrigerant leakage may be reduced since there is no separate joint or connection tool.

Here, in order to maintain a low temperature of the refrigerant as much as possible to increase cooling efficiency, an additional configuration for insulation such as an external coating may be provided on at least a portion of the cooling unit 310.

Meanwhile, at least a portion of the positive electrode line refrigerant pipe 310a, the connection pipe 313, and the negative electrode line refrigerant pipe 310b forming the cooling unit 310 may be formed of a thermal insulation and electrical insulation material having relatively lower thermal conductivity than that of the refrigerant pipe formed of metal through which the refrigerant flows in other components of the cooling system 300. For example, at least the portion of the positive electrode line refrigerant pipe 310a, the connection pipe 313, and the negative electrode line refrigerant pipe 310b forming the cooling unit 310 may be formed of a polymer-based pipe. In this case, in a section in which the positive electrode line 210a and the negative electrode line 210b are inserted into the cooling unit 310 so as to perform heat exchange, a material of the refrigerant pipe forming the closed loop of the cooling cycle is changed. For this purpose, a separate joint or connection tool may be provided.

Meanwhile, the positive electrode line refrigerant pipe 310a, the connection pipe 313, and the negative electrode line refrigerant pipe 310b may be formed in a tube shape. Furthermore, in consideration of cooling capacity and efficiency, the positive electrode line refrigerant pipe 310a, the connection pipe 313, and the negative electrode line refrigerant pipe 310b may be provided in various forms such as a circular shape, a polygonal shape, and so on as well as various diameters.

Referring to FIG. 3, in the present disclosure, in order to prevent an electrical short circuit that may occur due to condensation or leakage of the refrigerant caused by a low-temperature refrigerant, the cooling system 300 includes an insulation portion 315 at at least one of before and after the refrigerant flows into the cooling unit 310 in the closed loop connecting the compressor CP, the condenser CD, the expansion valve EV, and the cooling unit 310. For example, referring to FIG. 1, the insulation portion 400 may be provided at two points, i.e., before the positive electrode line 210a is inserted into the cooling unit 310 and before the negative electrode line 210b is inserted into the cooling unit 310. The insulation portion 315 may be provided such that the insulation portion 315 has a hollow structure so as to accommodate the refrigerant pipe therein.

The insulation portion 315 may be provided as a non-conductive material including at least one selected from a group consisting of perfluoroalkoxy (PFA), fluorinated ethylene (FEP), polytetrafluoroethylene (PTFE), polyether ether ketone (PEEK), a high heat-resistant plastic, nylon, silicone, and urethane. Particularly, in order to maintain an insulation function even in a low-temperature environment caused by the refrigerant, polyether ether ketone (PEEK) may be used, and PEEK corresponds to a semi-crystalline thermoplastic having excellent chemical resistance, excellent mechanical strength, a low moisture absorption rate, robust flame resistance, and excellent dimensional stability over a wide temperature range.

Referring to FIG. 2, in the present disclosure, the cooling system 300 may further include another insulation portion 400 on the connection pipe 313 of the cooling unit 310 in order to prevent an electrical short circuit that may occur due to condensation or leakage of the refrigerant caused by a low-temperature refrigerant. For example, as illustrated in FIG. 2, the insulation portion 400 having a hollow structure may be disposed on an outer surface of the connection pipe 313 connecting the positive electrode line refrigerant pipe 310a and the negative electrode line refrigerant pipe 310b to each other. As another embodiment, the insulation portion 400 may be provided by using the connection pipe 313 as a non-conductive material.

In the present disclosure, although the cooling unit 310 is mainly intended to directly exchange heat with the positive electrode line 210a and the negative electrode line 210b, a sub-refrigerant pipe 314 may be additionally provided by bypassing a portion of the cooling unit 310 as illustrated in FIG. 2. The sub-refrigerant pipe 314 may be provided by configuring a small refrigerant pipe through which a portion of the refrigerant is capable of selectively flowing from the positive electrode line refrigerant pipe 310a, the connection pipe 313, and the negative electrode line refrigerant pipe 310b, and the sub-refrigerant pipe 314 may perform thermal management of the power supply terminal 101 required in the connector 100. During fast charging, the power supply terminal 101 may also exchange heat with the sub-refrigerant pipe 314 in order to reduce heat generated as the power supply terminal 101 is connected to the charging terminal 11 of the electric vehicle 10. Unlike the power line 210a and 210b of the present disclosure, the sub-refrigerant pipe 314 may be disposed near the power supply terminal 101 so that indirect heat exchange with the refrigerant is performed. The refrigerant that has flowed through the sub-refrigerant pipe 314 is recovered again to the cooling system 300 of the closed loop.

In the present disclosure, as the refrigerant for providing an ultra-low temperature cooling environment, the refrigerant may be selected from one of R134a, R404A, R507, 1234yf, and 1234ze. The refrigerant supplied to the cooling unit 310 in a low-temperature and low-pressure liquid state after passing through the expansion valve in the cooling system 300 may undergo a phase change to a low-temperature and low-pressure gaseous state at least partially through heat exchange with the power line in the cooling unit 310. There is an effect of increasing cooling efficiency by using latent heat of vaporization of the refrigerant.

In FIG. 3, a cooling connection unit 500 for allowing the refrigerant flowing inside the refrigerant pipe P to meet the positive electrode line 210a or the negative electrode line 210b is illustrated.

The cooling connection unit 500 is provided with a current-carrying portion 510 to which a supplied positive or negative power is connected, and is provided with a refrigerant inlet portion 530 for allowing the refrigerant that has flowed inside the refrigerant pipe P to be introduced thereinto. The introduced refrigerant flows along an empty space inside the cooling connection unit 500 and meets the positive electrode line refrigerant pipe 310a or the negative electrode line refrigerant pipe 310b. The positive electrode line 210a or the negative electrode line 210b provided inside the cooling connection unit 500 is electrically joined at a power joining portion 520 provided at one side of the cooling connection unit 500, and is electrically connected to the current-carrying portion 510 provided from the outside. The power joining portion 520 and the positive electrode line 210a or the negative electrode line 210b may be electrically connected to each other through strong external pressing. A cap 540 is provided so as to prevent leakage of the refrigerant.

Meanwhile, as illustrated in FIG. 3, even though the insulating refrigerant is used, a current flowing along the positive electrode line or the negative electrode line may flow backward to a refrigerant flow line along the refrigerant pipe (copper pipe). In order to prevent this situation, the insulation portion 315 may be provided at one end of the refrigerant pipe. A portion of the refrigerant pipe (copper pipe) may be cut and may be connected to both ends of the insulation portion 315 by a method such as screw coupling.

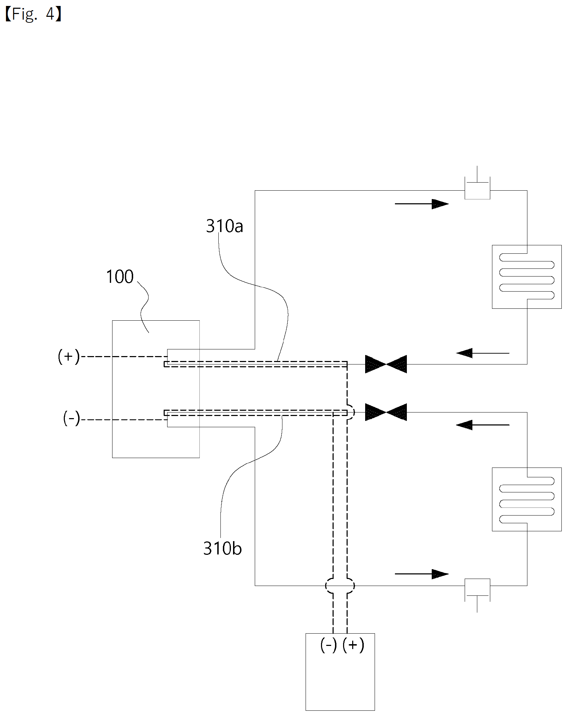

Meanwhile, referring to FIG. 4, it is possible to increase cooling performance by configuring two or more cooling systems 300. Particularly, it is also possible to configure a closed loop of a cooling cycle such that different cooling systems 300 separately cool the positive electrode line 210a and the negative electrode line 210b. In this case, not only cooling performance is increased, but also a possibility of occurrence of a short circuit due to condensation caused by a temperature difference or refrigerant leakage is significantly reduced, and there is an effect that a separate insulation portion 400 may not be required.

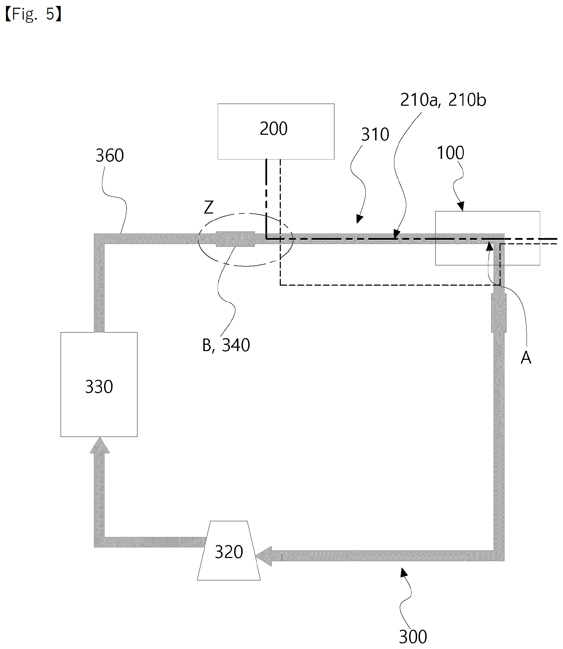

Referring to FIG. 5, still another embodiment of the high-power charging system of the present disclosure includes a cooling system based on a vapor compression refrigeration cycle for effectively controlling high heat generated during charging, the cooling system having the cooling unit 310 having a structure in which the power lines 210a and 210b are inserted into the cooling unit 310 so that the power lines 210a and 210b and a refrigerant pipe 360 are integrated in a flow direction.

As illustrated in FIG. 5, the high-power charging system according to the present disclosure includes the power supply unit 200, the cooling system 300 including a compressor 320 and a condenser 330, and the connector 100. The cooling unit 310 is configured such that a power line in the form of a bare wire is inserted into the cooling unit 310 and the power line directly contacts the refrigerant. As described above, the power line is not a conductor having an insulation coating, but is in a state in which the insulation coating is removed and a metal conductor is directly exposed, thereby directly contacting the refrigerant to perform high-speed heat exchange. Accordingly, a cooling medium may effectively respond to heat generation of the power line, and thermal resistance of the entire system is significantly reduced.

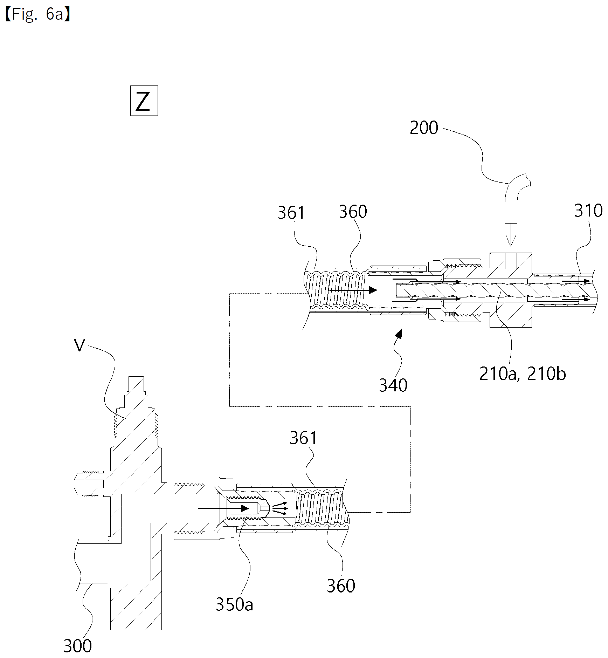

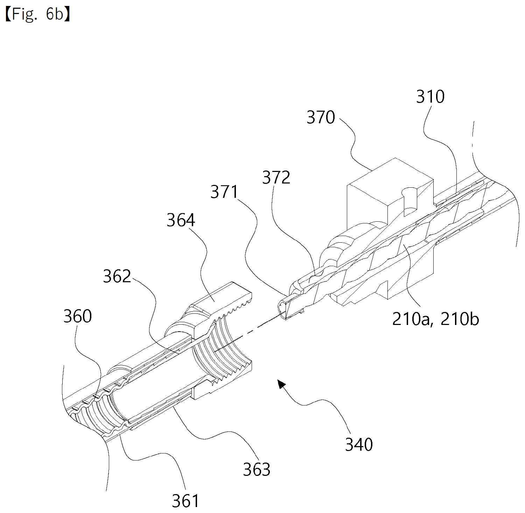

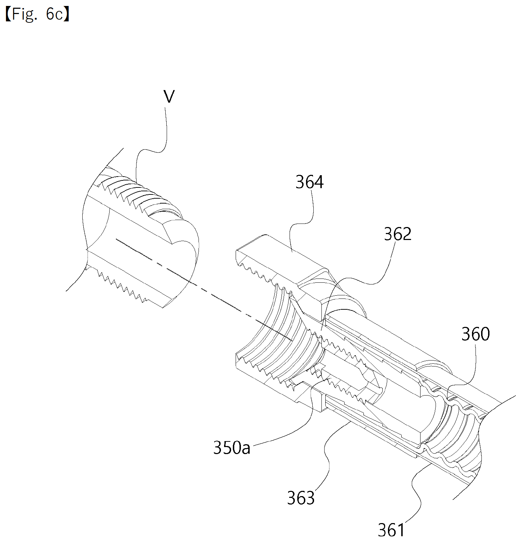

Referring to FIG. 5, FIG. 6a, FIG. 6b, and FIG. 6c, the cooling system is configured as a vapor compression refrigeration cycle, a high-temperature and high-pressure refrigerant is converted into a liquid state after passing through the condenser 330, and the high-temperature and high-pressure refrigerant expands to a low-temperature and low-pressure state through an orifice or a nozzle 350a applied instead of an expansion valve. The expanded refrigerant is introduced again into the compressor 320 and is introduced into the condenser 330 in a compressed state. The positive electrode line 210a and the negative electrode line 210b are inserted into a portion of the refrigerant pipe of the closed loop and are cooled.

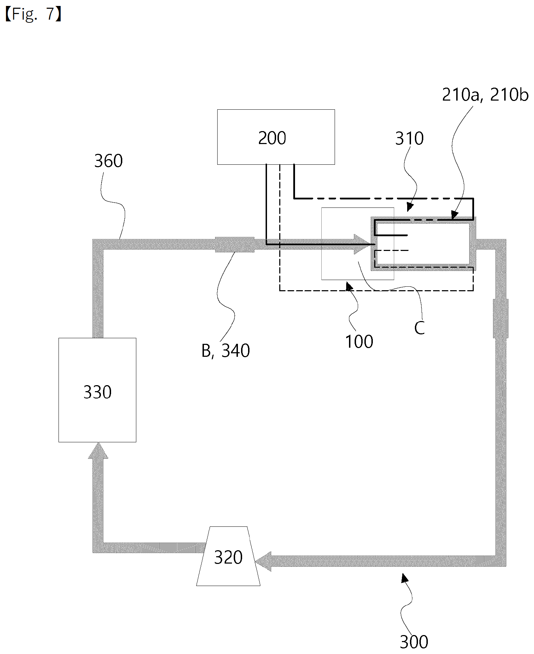

Referring to FIG. 5 and FIG. 7, an expansion means may replace the expansion valve EV illustrated in FIG. 1 and FIG. 4, or may be selectively disposed at at least one of an inner portion of the connector 100, an insulation portion B, 340 provided at an inlet side of the refrigerant pipe, or a separate refrigerant pipe or a refrigerant pipe at a ground side C. Each of these may be combined with the insulation portion so as to also perform an electrical shielding function.

Particularly, in the embodiment illustrated in FIG. 6a, the positive electrode line 210a and the negative electrode line 210b in the form of bare wires electrically connected to the power line are inserted into the cooling unit 310 connected to an end portion of the refrigerant pipe 360, and the positive electrode line 210a and the negative electrode line 210b are disposed on the same axis within the same flow path as the refrigerant. The refrigerant flows and surrounds each of the positive electrode line 210a and the negative electrode line 210b, and heat is rapidly removed by latent heat of evaporation of the refrigerant when the heat is transferred to the refrigerant.

Meanwhile, as illustrated in FIG. 6a and FIG. 6b, external power is supplied such that the power supply unit 200 is connected to the cooling unit 310 through a current-carrying portion 370, and the insulation portion 340 is formed on the refrigerant pipe 360 and communicates with the current-carrying portion 370, so that electric power is not transmitted to the cooling system 300 while power is capable of being stably supplied to the connector 100. In FIG. 6a to FIG. 6c, according to the present disclosure, the power line for supplying power from the outside and the positive electrode line 210a and the negative electrode line 210b provided in the cooling unit 310 are separately named, but this is for facilitating understanding of the present disclosure and is not limited thereto.

In addition, the current-carrying portion 370 is formed of a conductive material, a flow path for delivering the refrigerant of the refrigerant pipe 360 to the cooling unit 310 is formed, and the positive electrode line 210a and the negative electrode line 210b are disposed in the flow path. Furthermore, the power supply unit 200 for supplying power from the outside is provided so as to be electrically connected to the positive electrode line 210a and the negative electrode line 210b at one side of the current-carrying portion 370. A fixing end 371 for fixing ends of the positive electrode line 210a and the negative electrode line 210b is formed at an end portion of the current-carrying portion 370 so that the ends of the positive electrode line 210a and the negative electrode line 210b are stably positioned. In addition, an inlet port 372 through which the refrigerant is introduced is formed on an outer side of the fixing end 371 so that the refrigerant is capable of being introduced from the refrigerant pipe 360 into the insulation portion 340.

Meanwhile, the refrigerant pipe 360 is formed of a non-conductive Teflon tube. The non-conductive Teflon tube has insulation properties and flexibility, thereby providing insulation properties to the entire connection piping of the refrigerant pipe 360 and the cooling system 300 and enabling installation at various positions. In addition, the refrigerant pipe 360 may include a protective pipe 361 formed of a non-conductive braided fabric surrounding an outer circumferential surface of the refrigerant pipe 360, thereby protecting the refrigerant pipe 360 from an external environment and increasing pressure resistance.

As described above, the insulating portion 340 may be configured by forming the refrigerant pipe 360 of a non-conductive material and, accordingly, the refrigerant pipe 360 and the cooling unit 310 are connected in an electrically shielded state, so that supply of power and flow of the refrigerant may be stably performed.

Meanwhile, as illustrated in FIG. 6a and FIG. 6c, an expansion means 350a may be further provided between the cooling system 300 and the current-carrying portion 370, so that cooling efficiency may be increased. More specifically, a valve V for controlling supply of the refrigerant is formed at a side of the cooling system 300, and the nozzle 350a is provided on the refrigerant pipe 360 connected between the valve V and the insulation portion 340. Accordingly, the refrigerant discharged from the cooling system 300 expands to a low-temperature and low-pressure state during a process of being delivered, thereby increasing cooling efficiency. Although it is illustrated in the drawings that the nozzle 350a is provided on the refrigerant pipe 360 at a discharge side of the valve V, an installation position of the nozzle 350a is not limited thereto, and the nozzle 350a may be provided anywhere along a flow path through which the refrigerant discharged from the cooling system 300 is supplied toward the connector 100.

Meanwhile, as illustrated in FIG. 6a to FIG. 6c, the refrigerant pipe 360 and the current-carrying portion 370, and the refrigerant pipe 360 and the valve V are coupled in a watertight state by a hose nipple 362, a tube compression ring 363, and a flare nut 364, and may be configured to be selectively detachable. Here, as illustrated in FIG. 6c, the nozzle 350a may be inserted into the hose nipple 362.

Meanwhile, in yet another embodiment, FIG. 7 illustrates a system diagram in which an expansion means is selectively disposed at at least one of a position C of a separate refrigerant pipe or a refrigerant pipe in which a ground line is embedded.

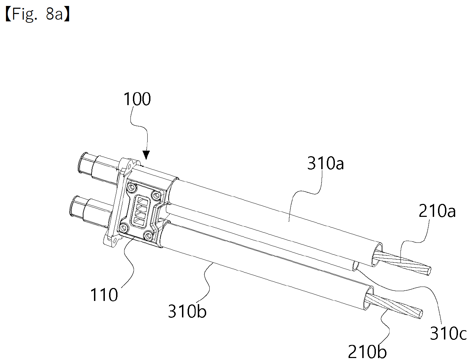

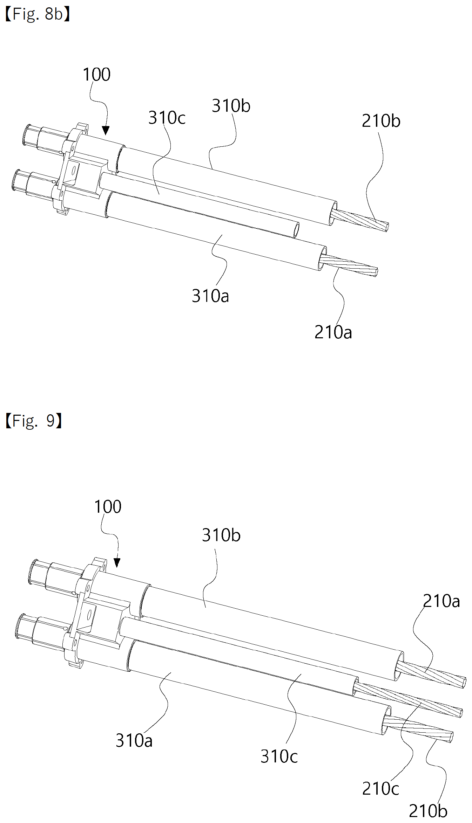

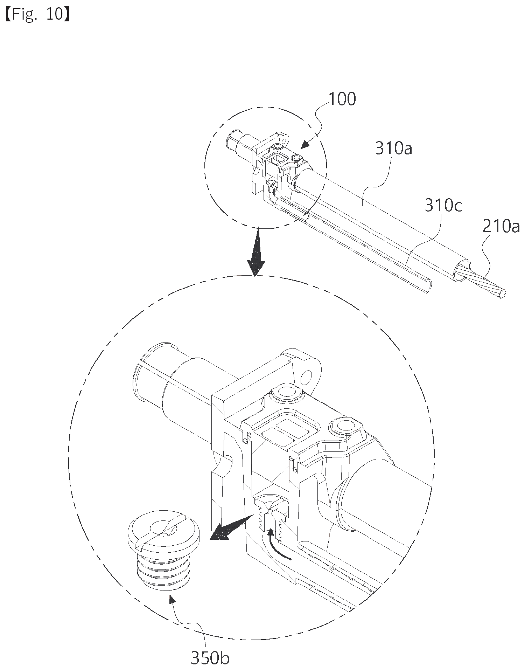

Referring to FIG. 7, FIG. 8a, and FIG. 8b, the refrigerant that has passed through the condenser 330 is introduced into the connector 100 through a third refrigerant pipe 310c, is branched into the positive electrode line refrigerant pipe 310a and the negative electrode line refrigerant pipe 310b inside the connector 100, and then flows back into the compressor 320. As illustrated in FIG. 10, the refrigerant introduced into the third refrigerant pipe 310c passes through an expansion means 350b (which may be a nozzle) disposed inside the connector, is cooled to a low-temperature and low-pressure state, and is then branched and discharged to the positive electrode line refrigerant pipe 310a and the negative electrode line refrigerant pipe 310b. Cooling efficiency may be increased by making the refrigerant have the lowest temperature at a connector side where heat generation is the greatest.

Meanwhile, FIG. 8a and FIG. 8b are views illustrating a state in which the third refrigerant pipe 310c is hollow and is joined to the connector 100, and FIG. 9 is a view illustrating a state in which a ground line 210c is embedded in the third refrigerant pipe 310c. That is, FIG. 9 presents a structure in which the ground line 210c is disposed together inside the third refrigerant pipe 310c, and this increases electrical stability and temperature balance of the entire system by cooling the ground line 210c in addition to the positive electrode line 210a and the negative electrode line 210b.

Referring to FIG. 8 and FIG. 10, a pressure control nozzle or an orifice is inserted inside the connector 100 in a process in which the refrigerant flows into and out of the connector 100. The nozzle 350b stabilizes a refrigerant flow and allows the refrigerant to contact the positive electrode line 210a and the negative electrode line 210b immediately after expansion of the refrigerant, thereby optimizing cooling efficiency. As a result, the system integrates the power line and the cooling flow path, minimizes the heat exchange path through the vapor compression refrigerant loop and selective expansion positions, suppresses vortices, simplifies the structure, and enables precise control of cooling. This is a system that satisfies cooling performance, structural integrity, and reliability simultaneously even under high-current charging conditions.

Meanwhile, referring to FIG. 10, the connector 100 includes a flow path structure or a cover 110 for preventing formation of vortices that may occur due to a rapid change in a flow velocity when the refrigerant is introduced into the connector side and for uniformly distributing the flow of the refrigerant. The cover 110 may include a guide rib or a tubular shape formed along an internal inflow path, and serves to mitigate collision of the refrigerant and non-uniform branching within an internal space of the connector 100. Particularly, by resolving high-speed vortices or pressure instability that may occur when the refrigerant is introduced immediately after being expanded through a nozzle or an orifice, the cover 110 contributes to stabilizing the flow of the refrigerant branched into each refrigerant pipe 310a and 310b.

Such a circulation port cover 110 or vortex-prevention flow path structure not only increases heat exchange efficiency in a section in which the power lines 210a and 210b contact the refrigerant, but also performs an important function in securing structural stability inside the connector and uniform distribution of the refrigerant. Accordingly, the present disclosure may simultaneously increase consistency of cooling performance and reliability of the system during high-power charging.

## Claims

1. A high-power charging system comprising:
a connector for charging an electric vehicle;
a power supply unit comprising a power line for supplying electricity to the connector; and
a cooling system comprising a cooling unit in which a refrigerant for cooling the power line flows,
wherein the power line is configured in a form of a bare wire,
wherein the cooling unit is formed in a structure in which the bare wire is directly inserted into a refrigerant pipe through which the refrigerant flows, and
wherein the cooling system forms a vapor compression refrigeration cycle comprising a compressor and a condenser.

2. The high-power charging system of claim 1, wherein the cooling system forms a closed-loop structure connecting the compressor, the condenser, an expansion valve, and the cooling unit in which the refrigerant for cooling the power line flows,
wherein the refrigerant in the refrigerant pipe is supplied in a low-temperature and low-pressure liquid state after passing through the expansion valve and directly contacts the bare wire, and at least a portion of the refrigerant undergoes a phase change from the liquid state to a gaseous state through heat exchange during charging, thereby absorbing latent heat and directly cooling the bare wire, and
wherein the refrigerant pipe extends to the connector.

3. The high-power charging system of claim 2, wherein the cooling system comprises an insulation portion at at least one of before and after the refrigerant flows into the cooling unit.

4. The high-power charging system of claim 2, wherein the power line comprises a positive electrode line and a negative electrode line,
wherein the cooling unit comprises a positive electrode line refrigerant pipe for cooling the positive electrode line, a negative electrode line refrigerant pipe for cooling the negative electrode line, and a connection pipe connecting the positive electrode line refrigerant pipe and the negative electrode line refrigerant pipe to each other, and
wherein the positive electrode line refrigerant pipe and the negative electrode line refrigerant pipe are formed of a thermal insulation and electrical insulation material having a lower thermal conductivity than that of the refrigerant pipe through which the refrigerant flows in the cooling system.

5. The high-power charging system of claim 4, wherein the connection pipe comprises an insulation portion.

6. The high-power charging system of claim 2, wherein the power line comprises a positive electrode line and a negative electrode line, and the cooling system is provided as a plurality of cooling systems, thereby separately cooling the positive electrode line or the negative electrode line.

7. The high-power charging system of claim 2, wherein the connector comprises a power supply terminal for connection with a charging terminal of the electric vehicle, and the cooling unit comprises a sub-refrigerant pipe for cooling the power supply terminal by bypassing a flow of a portion of the refrigerant.

8. The high-power charging system of claim 2, wherein the refrigerant is selected from one of R134a, R404A, R507, 1234yf, and 1234ze as a refrigerant for ultra-low temperature cooling, and undergoes a liquid-to-vapor phase change through heat exchange in the cooling unit.

9. The high-power charging system of claim 1, wherein the vapor compression refrigeration cycle further comprises an expansion means for reducing pressure of the refrigerant, and the expansion means is an orifice or a nozzle instead of an expansion valve.

10. The high-power charging system of claim 9, wherein the orifice or the nozzle is mounted at at least one position selected from a mounting position of the expansion valve, an inner portion of the connector, and an insulation portion provided before the power line is inserted into the cooling unit.

11. The high-power charging system of claim 1, wherein the cooling unit comprises a positive electrode line refrigerant pipe for cooling a positive electrode line, a negative electrode line refrigerant pipe for cooling a negative electrode line, and a third refrigerant pipe through which the refrigerant flows.

12. The high-power charging system of claim 11, wherein a ground line is inserted into the third refrigerant pipe.

13. The high-power charging system of claim 13, wherein the refrigerant cooled by an expansion means after the refrigerant flows into the connector through the third refrigerant pipe is branched and discharged into the positive electrode refrigerant pipe and the negative electrode refrigerant pipe.

14. The high-power charging system of claim 1, wherein the connector further comprises a cover for preventing a vortex that may occur due to a momentary increase in a flow rate in a section where the refrigerant is introduced into the connector and for uniformly controlling a flow of the refrigerant.
